# FASCICULE DE BREVET EUROPEEN

(11) **EP 2 485 675 B1**
(45) Date de publication et mention de la délivrance du brevet: **29.11.2017**
(21) Numéro de dépôt: 10776788.1
(22) Date de dépôt: 06.10.2010
(51) Int. Cl.: A61C 5/42

(54) **ALESOIR A CANAUX COMPRENANT UNE PLURALITE DE LEVRES DE COUPE HELICOÏDALES**
KANALAUFWEITER MIT MEHREREN SPIRALFÖRMIGEN SCHNEIDLIPPEN
CHANNEL REAMER INCLUDING A PLURALITY OF HELICAL CUT LIPS

(30) Priorité: 08.10.2009 FR 0957017
(43) Date de publication de la demande: 15.08.2012
(73) Titulaire: Micro-Mega International Manufactures, 25000 Besancon (FR)
(72) Inventeur: MORDENIZ, Julien, F-25000 Besancon (FR)
(74) Mandataire: Rhein, Alain
(86) Numéro de dépôt international: PCT/FR2010/052107
(87) Numéro de publication internationale: WO 2011/042662

(56) Documents cités:
- DE-A1-102007 039 700
- US-A1- 2003 068 597
- US-A1- 2006 228 669

## Description

### Domaine technique et état de l'art

L'invention concerne un alésoir à canaux comprenant une lame taillée comprenant une pluralité de lèvres hélicoïdales de coupe.

L'invention est notamment intéressante pour le traitement de canaux radiculaires dentaires.

Le traitement d'une racine dentaire dont les tissus sont endommagés consiste à extraire la pulpe pour nettoyer le canal, mettre en forme le canal et, pour finir, obturer le canal mis en forme, par exemple avec de la Gutta-percha, de la pâte et / ou un ciment de scellement.

La mise en forme du canal peut s'obtenir par la méthode "crown down" qui se résume par les actions ordonnancées suivantes : élargissement coronaire, préparation canalaire et finition apicale. Il résulte de ces opérations un canal plus ou moins courbé de forme conique dont le diamètre le plus petit se situe au niveau de l'apex (partie terminal du canal) et le diamètre le plus grand sera au niveau du plancher pulpaire (point de départ du canal radiculaire).

D'un point de vue pratique, pour mettre en forme le canal selon la méthode "crown down", on utilise des alésoirs comprenant une lame taillée comprenant une pluralité de lèvres hélicoïdales de coupe, prolongée par un manche manuel ou un manche mécanique destiné à être entraîné en rotation par un porte-outil du type pièce à main ou contre-angle. Plus précisément, on utilise successivement une pluralité d'alésoirs de caractéristiques géométriques (diamètre de pointes, conicité, pas des lèvres hélicoïdales de coupe, forme de la section, etc.) différentes, et à des longueurs de travail différentes. L'ordre de passage des différents instruments est défini dans un protocole de traitement fonction de l'état et de la forme de la racine à traiter. Le passage d'un instrument précédent permet de réduire considérablement les concentrations d'efforts et les effets de vissage qui s'appliqueraient à l'instrument suivant.

La mise en forme du canal selon cette méthode s'avère incommode et longue à effectuer, du fait de la nécessité de changer plusieurs fois d'alésoirs.

Le document US 2006/228669 A1 décrit un alésoir à canaux comprenant une lame taillée comprenant une pluralité de lèvres hélicoïdales de coupe, le nombre de lèvres hélicoïdales de coupe variant le long d'un axe longitudinal de la lame taillée. La lame passe de trois lèvres de coupes, sur la pointe, à quatre lèvres de coupes, puis la forme des lèvres de coupes varie en direction du talon.

### Description de l'invention

L'invention propose un nouvel alésoir à canaux comprenant une lame taillée comprenant une pluralité de lèvres hélicoïdales de coupe, le nombre de lèvres hélicoïdales de coupe variant le long d'un axe longitudinal de la lame taillée.

La variation du nombre de lèvres de coupe se traduit par une optimisation des contraintes et une minimisation des effets de vissage de la lame sur toute la longueur du canal. Le nettoyage et la mise en forme du canal peuvent ainsi être réalisés avec un unique alésoir selon l'invention. Ainsi, avec un alésoir selon l'invention, le traitement d'une racine est plus rapide et moins contraignant : il n'est plus nécessaire de changer d'alésoir, ni de se préoccuper de l'ordre d'utilisation d'une série d'alésoirs.

Dans les alésoirs connus, sur une section donnée de la lame orthogonale à l'axe longitudinal de la lame, toutes les lèvres de coupe présentent des caractéristiques géométriques identiques, notamment un pas d'hélice, un angle d'hélice, un angle de coupe, etc.

L'objet de la présente invention est un alésoir à canaux avec une lame taillée comprenant une pluralité de lèvres hélicoïdales de coupe, un nombre de lèvres hélicoïdales de coupe variant le long d'un axe longitudinal de la lame taillée, la lame taillée comprenant successivement, le long de l'axe longitudinal de la lame : • une première portion dans laquelle la lame comprend un premier nombre de lèvres hélicoïdales ayant des premières caractéristiques géométriques identiques au niveau des sections orthogonales à l'axe longitudinal, le long de la première portion (P1) • une deuxième portion dans laquelle la lame comprend un deuxième nombre de lèvres hélicoïdales ayant des caractéristiques géométriques différentes d'une lèvre à l'autre, le deuxième nombre étant différent du premier nombre, et • une troisième portion dans laquelle la lame comprend un nombre de lèvres hélicoïdales égal au deuxième nombre, et dans laquelle les lèvres hélicoïdales ont des deuxième s caractéristiques géométriques identiques au niveau des sections orthogonales à l'axe longitudinal le long de la troisième portion, les deuxièmes caractéristiques géométriques étant différentes des premières caractéristiques géométriques. Dans le cadre de l'invention, de préférence, au moins sur une section de la lame orthogonale à l'axe longitudinal de la lame taillée, un pas d'hélice, un angle d'hélice ou un angle de coupe d'une lèvre de coupe est différent du pas d'hélice, de l'angle d'hélice ou de l'angle de coupe des autres lèvres de coupe. Varier le pas d'hélice ou l'angle d'hélice d'une des lèvres de coupe indépendamment du pas d'hélice ou de l'angle d'hélice des autres lèvres de coupe est une solution pour modifier le nombre de lèvres de coupe, comme on le verra mieux plus loin dans des exemples. L'angle de coupe est ajusté pour optimiser l'effet de la lèvre de coupe en fonction du pas d'hélice et de l'angle d'hélice.

Dans la première portion et dans la troisième portion, les caractéristiques géométriques des lèvres peuvent varier le long de la portion considérée, mais le cas échéant les caractéristiques géométriques restent identiques d'une lèvre à l'autre.

La deuxième portion est une portion de transition, dans laquelle au moins une des caractéristiques géométriques d'une des lèvres de la lame est modifiée, de sorte que le nombre de lèvres de coupe de la première portion soit différent du nombre de lèvres de coupe de la troisième portion, comme on le verra mieux plus loin dans des exemples.

Les caractéristiques géométriques d'une lèvre de coupe susceptibles d'être variées sont par exemple :
- un pas d'hélice, et / ou
- un angle d'hélice et / ou
- un angle de coupe.

Dans un exemple de réalisation, la lame taillée d'un alésoir selon l'invention comprend trois lèvres de coupe dans la première portion au voisinage de la pointe de la lame, et deux lèvres de coupe dans la troisième portion au voisinage d'une extrémité opposée à la point de la lame. La lame peut être sensiblement conique ou cylindrique.

La lame taillée peut être prolongée par une quatrième portion cylindrique et non taillée. Cette portion apporte plus de souplesse à l'alésoir.

La lame taillée, et éventuellement la quatrième portion, peut être prolongée par :
- un manche manuel, pour une utilisation manuelle de l'alésoir, ou
- un manche mécanique permettant une connexion de la lame à un outil d'entraînement en rotation, pour une rotation en continue ou alternée de l'alésoir.

### Brève description des figures

L'invention sera mieux comprise, et d'autres caractéristiques et avantages de l'invention apparaîtront à la lumière de la description qui suit d'un exemple de réalisation d'un alésoir selon l'invention. Cet exemple est donné à titre non limitatif. La description est à lire en relation avec les dessins annexés dans lesquels :
- la figure 1 est une vue globale d'un alésoir selon l'invention
- les figures 2, 3A à 3E et 4 montrent l'évolution de la section de la lame taillée de l'alésoir de la figure 1, section selon des plans perpendiculaires à l'axe longitudinal de la lame, la figure 2 représente la section le long de la portion P1, les figures 3A à 3E représentent les sections le long de la portion P2, la figure 4 représente la section le long de la portion P3, et
- la figure 5 est une vue de la lame taillée de l'alésoir de la figure 1.

### Description du mode de réalisation de l'invention représenté sur les figures

L'alésoir représenté comprend une lame taillée de forme sensiblement conique. La lame comprend trois goujures hélicoïdales 1, 2, 3 au voisinage de la pointe de lame et deux goujures hélicoïdales 2, 3 au voisinage du talon de la lame taillée (extrémité opposée à la pointe). L'intersection de la goujure 1 avec la goujure 2 forme la lèvre de coupe S1, l'intersection de la goujure 2 avec la goujure 3 forme la lèvre de coupe S2, l'intersection de la goujure 3 avec la goujure 1 forme la lèvre de coupe S3. Chaque lèvre de coupe s'étend en hélice le long de la lame. La lame comprend trois portions taillées.

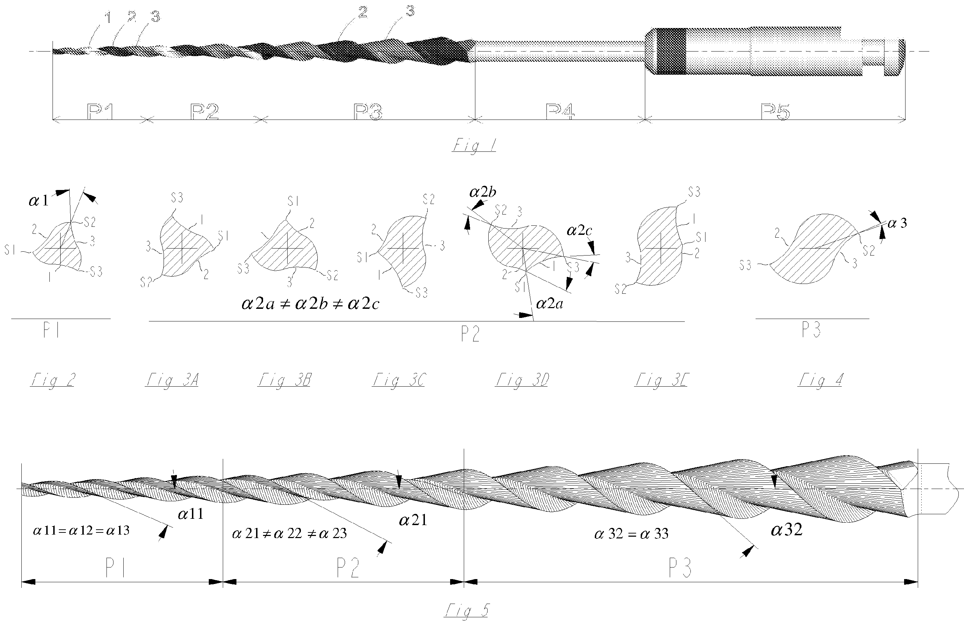

Dans la première portion P1 taillée, la lame comprend trois lèvres de coupe présentant toutes des caractéristiques géométriques identiques au niveau d'une section de lame (figure 2) :
- même pas d'hélice,
- même angle d'hélice alpha11 = alpha12 = alpha13
- même angle de coupe alpha1

Deux sections de la portion P1 peuvent néanmoins présenter des caractéristiques géométriques différentes.

La longueur de la première portion P1 est ici d'environ L1 = 2 à 6 mm (par exemple 4 mm), son petit diamètre est de l'ordre de 0.1 à 0.4 mm (pare exemple 0.2 mm) à la pointe de l'alésoir et son grand diamètre est de l'ordre de 0.15 à 0.8 mm (par exemple 0.5 mm) au voisinage de la deuxième portion. Toutes les caractéristiques géométriques de la première portion (le nombre de lèvres de coupe, le pas des hélices, l'angle de coupe, l'angle d'hélice, la conicité, la longueur, le diamètre de pointe, etc.) sont ajustées pour obtenir la meilleure répartition des contraintes mécaniques dans la lame et un bon centrage pour la finition apicale.

Le changement du nombre de lèvres hélicoïdales s'opère sur la deuxième portion taillée P2 de la lame, en modifiant indépendamment la valeur du pas de chacune des lèvres hélicoïdales. Ainsi, au niveau d'une section de la lame (figures 3A, 3B, 3C, 3D ou 3E) :
- au moins une des hélices a un pas différent de celui des autres hélices,
- les angles d'hélice alpha21, alpha22, alpha23 sont différents, ajustés en fonction des variations des pas des hélices pour une répartition optimale des contraintes mécaniques sur la lame
- les angles de coupe alpha2a, alpha2b, alpha2c sont différents ; ils sont optimisés à chaque section pour une efficacité de coupe optimale

Les figures 3A à 3E montrent l'évolution progressive de la section de la lame dans la portion P2, depuis le voisinage de la portion P1 (figure 3A) jusqu'au voisinage de la portion P3 (figure 3E). L'évolution des valeurs des pas des goujures 1, 2, 3 entraîne un déplacement angulaire relatif des lèvres de coupe S1, S2, S3 initialement sur trois rayons espacés l'un de l'autre de 120° par rapport à l'axe longitudinal de la lame (figure 2, figure 3A). Le long de la portion P2, la goujure 2 s'enroule sur elle-même de 120° de plus que la goujure 1, la goujure 3 s'enroule sur elle-même de 60° de plus que la goujure 1. La goujure 1 devient tangente à la goujure 2. La lèvre de coupe 1 qui est l'intersection entre la goujure 1 et la goujure 2 disparaît donc progressivement (figures 3A à 3E), puis complètement (figure 4).

La longueur L2 de la deuxième portion P2 est dans l'exemple représenté d'environ L2 = 3 à 7 mm (par exemple 5 mm), son petit diamètre est de l'ordre de 0.15 à 0.8 mm (par exemple 0.5 mm) au voisinage de la première portion P1 et son grand diamètre est de l'ordre de 0.2 à 1.2 mm (par exemple 0.8 mm) au voisinage de la troisième portion P3. Toutes les caractéristiques géométriques de la deuxième portion (le nombre de lèvres de coupe, le pas des hélices, l'angle de coupe, l'angle d'hélice, la conicité, la longueur, le diamètre de pointe, etc.) et notamment l'évolution des pas d'hélices des lèvres de coupe le long de la deuxième portion, sont ajustées pour obtenir la meilleure répartition des contraintes mécaniques dans la lame et de l'évolution du nombre de lèvres de coupe entre la première portion P1 et la troisième portion P3.

Dans la troisième portion taillée P3, la lame comprend deux lèvres de coupe présentant toutes des caractéristiques géométriques identiques au niveau d'une section de lame (figure 4) :
- même pas d'hélice,
- même angle d'hélice alpha32 = alpha33
- même angle de coupe alpha3

Deux sections de la portion P3 peuvent néanmoins présenter des caractéristiques géométriques différentes.

La longueur L3 de la troisième portion P3 est ici d'environ L3 = 7 à 11 mm (par exemple 9,2 mm), son petit diamètre est de l'ordre de 0.2 à 1.2 mm (par exemple 0.8 mm au voisinage de la deuxième portion P2 et son grand diamètre est de l'ordre de 0.5 à 1.6 mm (par exemple 1.2 mm) au voisinage de l'extrémité de la lame. Toutes les caractéristiques géométriques de la troisième portion (le nombre de lèvres de coupe, le pas des hélices, l'angle de coupe, l'angle d'hélice, la conicité, la longueur, etc.) sont ajustées pour obtenir la meilleure répartition des contraintes mécaniques dans la lame et un bon centrage de la lame dans le canal à traiter. Les angles d'hélice et les angles de coupe dans la troisième portion sont ici supérieurs à ceux d'une portion de lame à trois lèvres de coupe, de sorte que l'efficacité de coupe et la capacité de remontée des débris sont améliorées.

Dans l'exemple représenté, la lame taillée est prolongée par une quatrième portion P4 non taillée et cylindrique, qui apporte plus de souplesse à la lame.

Dans l'exemple représenté encore, la quatrième portion P4, est prolongée par un manche mécanique P5 permettant une connexion de la lame à un outil d'entraînement en rotation.

Bien sûr, l'alésoir représenté sur les figures n'est qu'un exemple d'alésoir selon l'invention, dans lequel le nombre (3) de lèvres de coupe au voisinage de la pointe de la lame taillée est supérieur au nombre (2) de lèvres au voisinage du talon de la lame taillée. De nombreuses variantes sont envisageables en fonction des caractéristiques techniques (résistance mécanique, effort de torsion, etc.) souhaitées, par exemple :
- un nombre de lèvres de coupe au voisinage de la pointe de la lame taillée inférieur au nombre de lèvres de coupe au voisinage du talon de la lame taillée
- au moins trois portions de lames ayant des nombre de lèvres différents d'une portion à l'autre, par exemple une portion avec quatre lèvres de coupe, une portion avec trois lèvres de coupe et une portion avec deux lèvres de coupe.

Egalement, il est possible de réaliser des alésoirs ayant des caractéristiques techniques identiques, selon des modes de réalisation différents. Par exemple, pour réaliser un alésoir comprenant 4 lèvres de coupe S1 à à S4 à la pointe, avec des lèvres de coupe espacées de 90° l'une par rapport à l'autre, et deux lèvres de coupe au talon, avec des lèvres de coupe espacées de 180° l'une par rapport à l'autre, il est possible, le long de la portion P2, au choix :
- tailler une goujure 1 qui s'enroule sur elle-même avec les mêmes paramètres géométriques que dans la portion P1, tailler une goujure 2 qui s'enroule sur elle-même de 90° de plus que la goujure 1, tailler une goujure 3 qui s'enroule sur elle-même de 180° de plus que la goujure 1, tailler une goujure 4 qui s'enroule sur elle-même de 90° de plus que la goujure 1 ; ainsi, les goujures 3, 4 deviennent tangentes à la goujure 1 et disparaissent, et les lèvres de coupe S3, S4 disparaissent également, ou
- tailler une goujure 1 qui s'enroule sur elle-même avec les mêmes paramètres géométriques que dans la portion P1, tailler une goujure 2 qui s'enroule sur elle-même de 90° de plus que la goujure 1, tailler une goujure 3 qui s'enroule sur elle-même avec les mêmes paramètres géométriques que dans la portion P1, tailler une goujure 4 qui s'enroule sur elle-même de 90° de plus que la goujure 1 ; ainsi, la goujure 2 devient tangente à la goujure 3 et la goujure 4 devient tangente à la goujure 1 de sorte que les goujures 2 et 4, et les lèvres de coupes S2, S4 disparaissent.

Les alésoirs selon l'invention sont réalisés par taillage à l'aide d'une meule d'un barreau métallique de forme générale conique ou cylindrique. Les goujures hélicoïdales sont taillées l'une après l'autre, depuis la pointe de la lame jusqu'au talon, par exemple :
- d'abord la goujure 1 (choisie comme référence), avec un pas p1, constant ou non sur toute la longueur L de la lame,
- puis la goujure 2, avec un pas p2 = p1 sur la portion 1, puis p2 différent de p1 avec p2 tel que la goujure 2 s'enroule sur elle-même d'un angle theta2 de plus que la goujure 1 sur la portion 2, puis p2 = p1 sur la portion 3,
- puis la goujure 3, avec un pas p3 = p1 sur la portion 1, puis p3 différent de p1 avec p3 tel que la goujure 3 s'enroule sur elle-même d'un angle theta3 de plus que la goujure 1 sur la portion 2, puis p2 = p1 sur la portion 3
- ...

Les paramètres de l'outil de taillage, notamment l'angle d'inclinaison et la vitesse de déplacement en translation de la meule, la vitesse de déplacement (en rotation et / ou en translation devant la meule) du barreau à tailler sont adaptés pour chaque goujure, et pour chaque portion de la lame, pour obtenir les pas de goujure souhaités.

## Revendications

1. Alésoir à canaux comprenant une lame taillée comprenant une pluralité de lèvres hélicoïdales de coupe, un nombre de lèvres hélicoïdales de coupe variant le long d'un axe longitudinal de la lame taillée, et la lame taillée comprenant successivement, le long de l'axe longitudinal de la lame :
• une première portion (P1) dans laquelle la lame comprend un premier nombre de lèvres hélicoïdales (S1, S2, S3) ayant des premières caractéristiques géométriques identiques au niveau des sections orthogonales à l'axe longitudinal, le long de la première portion (P1)
• une deuxième portion (P2) dans laquelle la lame comprend un deuxième nombre de lèvres hélicoïdales (S2, S3) ayant des caractéristiques géométriques différentes d'une lèvre à l'autre, le deuxième nombre étant différent du premier nombre, et
• une troisième portion (P3) dans laquelle la lame comprend un nombre de lèvres hélicoïdales (S2, S3) égal au deuxième nombre, et dans laquelle les lèvres (S2, S3) ont des deuxième caractéristiques géométriques identiques au niveau des sections orthogonales à l'axe longitudinal, le long de la troisième portion (P3), les deuxièmes caractéristiques géométriques étant différentes des premières caractéristiques géométriques.

2. Alésoir selon la revendication 1, dans lequel, au moins sur une section de la lame orthogonale à l'axe longitudinal de la lame taillée, un pas d'hélice, un angle d'hélice (α21,α22,α23) ou un angle de coupe (α2a, α2b, α2c) d'une lèvre de coupe est différent du pas d'hélice, de l'angle d'hélice ou de l'angle de coupe des autres lèvres de coupe.

3. Alésoir selon l'une des revendications 1 à 2, dans lequel la lame taillée a une forme générale conique.

4. Alésoir selon l'une des revendications 1 à 3, dans lequel la lame taillée comprend trois lèvres de coupe (S1,S2,S3) au voisinage de la pointe de la lame, et deux lèvres de coupe (S2,S3) au voisinage d'une extrémité opposée à la point de la lame.

5. Alésoir selon l'une des revendications 1 à 3, dans lequel la lame taillée comprend deux lèvres de coupe au voisinage de la pointe de la lame, et trois lèvres de coupe au voisinage d'une extrémité opposée à la pointe de la lame.

6. Alésoir selon la revendication 1, dans lequel les premières caractéristiques géométriques et les deuxièmes caractéristiques géométriques comprennent notamment, pour chacune des lèvres hélicoïdales de la lame : un pas d'hélice, et / ou un angle d'hélice et / ou un angle de coupe.

7. Alésoir selon l'une des revendications précédentes, dans lequel la lame taillée est prolongée par une quatrième portion (P4) cylindrique et non taillée.

8. Alésoir selon l'une des revendications précédentes, dans lequel la lame taillée, et éventuellement la quatrième portion (P4), est prolongée par un manche (P5) manuel ou un manche mécanique permettant une connexion de la lame à un outil d'entraînement en rotation.

## Patentansprüche

1. Aufweiter für Kanäle, umfassend eine geschliffene Klinge, umfassend eine Vielzahl schraubenförmiger Schneidlippen, wobei eine Anzahl schraubenförmiger Schneidlippen entlang einer Längsachse der geschliffenen Klinge schwankt und die geschliffene Klinge aufeinanderfolgend entlang der Längsachse der Klinge umfasst:
• einen ersten Abschnitt (P1), in dem die Klinge eine erste Anzahl schraubenförmiger Lippen (S1, S2, S3) mit ersten identischen geometrischen Merkmalen im Bereich der zur Längsachse orthogonalen Querschnitte entlang des ersten Abschnitts (P1) umfasst,
• einen zweiten Abschnitt (P2), in dem die Klinge eine zweite Anzahl schraubenförmiger Lippen (S2, S3) mit unterschiedlichen geometrischen Merkmalen von einer Lippe zur anderen umfasst, wobei sich die zweite Anzahl von der ersten Anzahl unterscheidet, und
• einen dritten Abschnitt (P3), in dem die Klinge eine Anzahl schraubenförmiger Lippen (S2, S3) umfasst, die der zweiten Anzahl entspricht, und in dem die Lippen (S2, S3) zweite identische geometrische Merkmale im Bereich der zur Längsachse orthogonalen Querschnitte entlang des dritten Abschnitts (P3) haben, wobei sich die zweiten geometrischen Merkmale von den ersten geometrischen Merkmalen unterscheiden.

2. Aufweiter nach Anspruch 1, wobei sich über mindestens einen zur Längsachse der geschliffenen Klinge orthogonalen Querschnitt der Klinge ein Schraubengang, ein Schraubenwinkel (α21, α22, α23) oder ein Schnittwinkel (α2a, α2b, α2c) einer Schneidlippe vom Schraubengang, vom Schraubenwinkel oder vom Schnittwinkel der anderen Schneidlippen unterscheidet.

3. Aufweiter nach einem der Ansprüche 1 bis 2, wobei die geschliffene Klinge eine allgemeine konische Form hat.

4. Aufweiter nach einem der Ansprüche 1 bis 3, wobei die geschliffene Klinge drei Schneidlippen (S1, S2, S3) in der Nähe der Spitze der Klinge und zwei Schneidlippen (S2, S3) in der Nähe eines zur Spitze der Klinge gegenüberliegenden Endes umfasst.

5. Aufweiter nach einem der Ansprüche 1 bis 3, wobei die geschliffene Klinge zwei Schneidlippen in der Nähe der Spitze der Klinge und drei Schneidlippen in der Nähe eines zur Spitze der Klinge gegenüberliegenden Endes umfasst.

6. Aufweiter nach Anspruch 1, wobei die ersten geometrischen Merkmale und die zweiten geometrischen Merkmale insbesondere für jede der schraubenförmigen Lippen der Klinge einen Schraubengang, und/oder einen Schraubenwinkel und/oder einen Schnittwinkel umfassen.

7. Aufweiter nach einem der vorangehenden Ansprüche, wobei die geschliffene Klinge von einem vierten zylindrischen und nicht geschliffenen Abschnitt (P4) verlängert ist.

8. Aufweiter nach einem der vorangehenden Ansprüche, wobei die geschliffene Klinge und eventuell der vierte Abschnitt (P4) von einem Handgriff (P5) oder einem mechanischen Griff verlängert ist, der eine Verbindung der Klinge mit einem Rotationsantriebswerkzeug erlaubt.

## Claims

1. A channel reamer comprising a cut blade comprising a plurality of helical cutting lips, a number of helical cutting lips varying along a longitudinal axis of the cut blade, and the cut blade successively comprising, along the longitudinal axis of the blade:
• a first portion (P1) in which the blade comprises a first number of helical lips (S1, S2, S3) having first geometric characteristics identical at sections orthogonal to the longitudinal axis, along the first portion (P1),
• a second portion (P2) in which the blade comprises a second number of helical lips (S2, S3) having different geometric characteristics from one lip to another, the second number being different from the first number, and
• a third portion (P3) in which the blade comprises a number of helical lips (S2, S3) equal to the second number, and in which the lips (S2, S3) have second identical geometric characteristics at sections orthogonal to the longitudinal axis, along the third portion (P3), the second geometric characteristics being different from the first geometric characteristics.

2. The reamer according to claim 1, wherein, at least over a section of the blade orthogonal to the longitudinal axis of the cut blade, a helix pitch, a helix angle (α21, α22, α23) or a cutting angle (α2a, α2b, α2c) of a cutting lip is different from the helix pitch, the helix angle or the cutting angle of the other cutting lips.

3. The reamer according to one of claims 1 to 2, wherein the cut blade has a conical general shape.

4. The reamer according to one of claims 1 to 3, wherein the cut blade comprises three cutting lips (S1, S2, S3) near the tip of the blade, and two cutting lips (S2, S3) near an end opposite the tip of the blade.

5. The reamer according to one of claims 1 to 3, wherein the cut blade comprises two cutting lips near the tip of the blade, and three cutting lips near an end opposite the tip of the blade.

6. The reamer according to claim 1, wherein the first geometric characteristics and the second geometric characteristics in particular comprise, for each of the helical lips of the blade: a helix pitch and/or a helix angle and/or a cutting angle.

7. The reamer according to one of the preceding claims, wherein the cut blade is extended by a cylindrical and non-cut fourth portion (P4).

8. The reamer according to one of the preceding claims, wherein the cut blade, and optionally the fourth portion (P4), is extended by a manual handle (P5) or a mechanical handle allowing the blade to be connected to a rotational driving tool.
